# EUROPEAN PATENT SPECIFICATION

(11) **EP 1 875 810 B1**
(45) Date of publication and mention of the grant of the patent: **19.10.2011**
(21) Application number: 06116696.3
(22) Date of filing: 06.07.2006
(51) Int. Cl.: A23G 9/32, A23D 7/00, A23G 3/34

(54) **Low-fat, water-in-oil confectionery emulsion**
Wasser-in-Öl Süsswarenemulsion mit geringem Fettgehalt
Emulsion eau-dans-huile pour confiserie à faible teneur en graisses

(43) Date of publication of application: 09.01.2008
(73) Proprietor: Nestec S.A., 1800 Vevey (CH)
(72) Inventor: Rousset, Philippe, 1010 Echallens (CH); Rey, Brigitte, 1623 Semsales (CH); Sandoz, Laurence, 1040, Echallens (CH)
(74) Representative: Baumgartner Harris, Pauline

(56) References cited:
- EP-A1- 0 986 959
- WO-A-95/17953
- WO-A-97/02754
- US-A- 3 223 532

## Description

### Field of the invention

The present invention relates to frozen confectionery coatings which have a low amount of fat. In particular, it relates to the use of water-in-oil emulsion as low-fat coating for frozen confections.

### Background of the invention

Edible coatings are commonly used in frozen confectionery products, as they provide a texture or taste contrast and improve the organoleptic properties of the product. The most common coatings used in the frozen dessert industry are chocolate-based coatings. These usually consist of milk, sugar, and cocoa in fat.

As a viable alternative to fat-based compositions, water-in-oil emulsions have been developed. Water-in-oil emulsions are known to be used in filling compositions, such as disclosed in EP 0 547 658 B1, EP 0 397 247 B1, EP 0 440 203 A1 or as spreads or fat substitutes such as described in EP 0 430 329 B1 and EP 0 441 495 A2 for instance.

Water-in-oil emulsions which may serve as a coating in frozen confectionery products have also been described, for instance, in EP 0 986 959 A1. Therein, a coating composition having soft texture, good adhesion on ice cream, reduced fat content, good flavour release and good storage and heat-shock resistance is provided by a water-in-oil emulsion.

US 5,556,659 also discloses a water-in-oil emulsion which has the same texture and flavour properties as required for conventional fat-based coatings, but which contains less fat.

Fat continuous emulsions are also mentioned in WO 97/02754 for use as a coating layer for frozen or chilled confectionery products.

US 3,223,532 describes emulsions for food use which may be used for enrobing ice cream bars. The viscosity of the emulsion should be between 18 and 35 degrees MacMichael for enrobing ice creams, while a viscosity of 35-150 degrees MacMichael is useful as icings, candy coatings, sauces and the like.

A method for manufacturing water-containing chocolates and chocolate compositions by using a water-in-oil emulsion is described in US 6,159,526. The choice of emulsifiers is the critical factor in achieving the desired products.

EP 0 958 747 B1 relates to a process for preparing chocolate formulations which is cost effective and results in reduced calorie formulations. This is provided by a water-in-oil emulsion in which sugar syrup is dispersed in the fat phase.

### Object of the invention

There thus remains a need to develop an improved frozen dessert coating which has similar mechanical properties to a regular ice-cream coating, with a reduced calorie content.

### Summary of the invention

Accordingly, this is achieved by the features of the independent claims. The dependent claims further develop the central idea of the invention.

Thus, in a first aspect, the invention provides for a water-in-oil emulsion composition for preparing a brittle frozen confectionery coating comprising from 55 to 70% of an aqueous phase and from 20 to 30% of an oil phase, wherein the aqueous phase comprises solids dissolved therein in an amount less than 10% and wherein food-grade particles are suspended in the oil phase in an amount up to 20%, and wherein emulsifiers selected from sugar esters, polyglycerol fatty acid esters, polyglycerol polyricinoleate (PGPR), polysorbates (polyoxyethylene sorbitan esters), monoglycerides and any possible combination thereof are present in the fat phase in an amount of from 0.5 to 3%.

A second aspect of the invention relates to the use of a water-in-oil emulsion composition according to any of claims 1 to 7 for the production of a brittle coating for frozen confectionery.

The invention further provides for a brittle coating for frozen confectionery comprising a water-in-oil emulsion according to any of claims 1 to 7.

Thus, the invention also relates to a coated frozen dessert comprising a coating according to any of claims 9 to 10.

Finally, a method for producing a water-in-oil emulsion as defined in claim 1 for preparing a brittle frozen confectionery coating comprising the steps of
a) Preparing an aqueous phase by mixing water with up to 10% of water-soluble solids and heating the mixture
b) Preparing a fat phase by mixing fat and emulsifiers selected from sugar esters, polyglycerol fatty acid esters, polyglycerol polyricinoleate (PGPR), polysorbates (polyoxyethylene sorbitan esters), monoglycerides and combinations thereof and heating the mixture
c) Emulsifying the mixture of said aqueous phase and said fat phase under heat to provide an emulsion comprising from 55 to 70% of an aqueous phase and 20 to 30% of fat phase
d) Gently adding up to 20% of food-grade particles into the emulsion
e) Coating a frozen confectionery with the emulsion obtained in step c
constitutes a further aspect of the invention.

### Figures

The present invention is further described hereinafter with reference to some of its embodiments shown in the accompanying drawings in which:
- Figure 1 is a flow chart illustrating the process resulting in the coating composition of the invention,
- Figure 2 shows the influence of sucrose on the brittleness of the coating and compares the brittleness of known references and the brittleness of coatings of the present invention.

### Detailed description of the invention

In the present disclosure, the terms "fat" and "oil" are used interchangeably and are taken to have the same meaning.

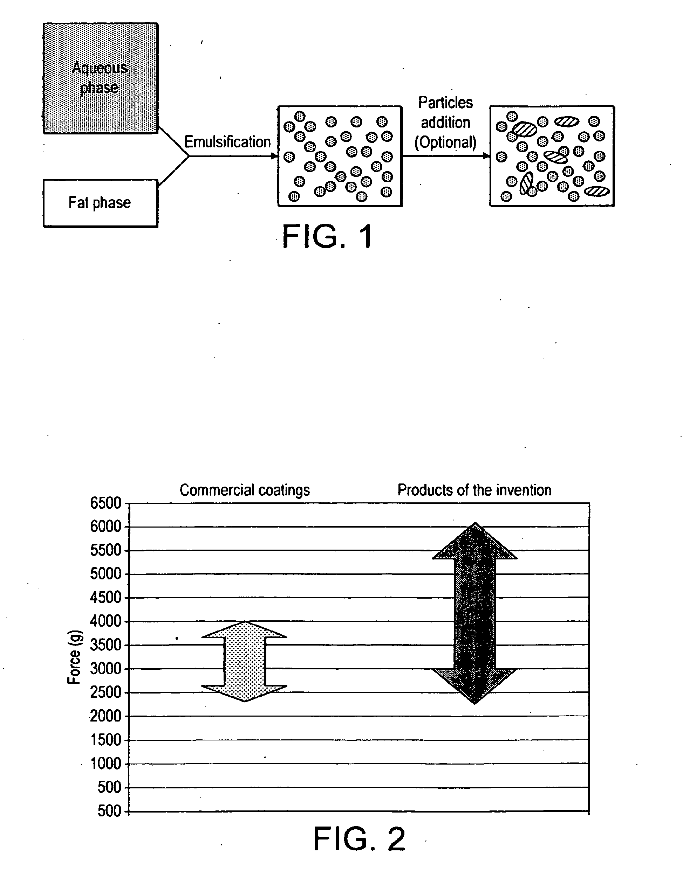

Referring to fig. 1, the water-in-oil emulsion compositions of the present invention are obtained by mixing an aqueous phase into a fat phase, and emulsifying the mixture such that the fat phase is continuous.

According to an aspect of the present invention, the water-in-oil emulsion comprises from 55 to 70% of an aqueous phase and from 20 to 30% of an oil phase, wherein the aqueous phase comprises solids dissolved therein in an amount less than 10% and wherein food-grade particles are suspended in the oil phase in an amount up to 20%, and wherein emulsifiers selected from sugar esters, polyglycerol fatty acid esters, polyglycerol polyricinoleate (PGPR), polysorbates (polyoxyethylene sorbitan esters), monoglycerides and any possible combination thereof are present in the fat phase in an amount of from 0.5 to 3%.

The solids dissolved in the aqueous phase are selected from any food-grade, water-soluble agents, such as sugars, milk powders, gelling agents etc. and mixtures thereof.

Typical sugars used in the aqueous phase are sucrose, fructose, sugar replacers such as polyols (e.g. maltitol, lactitol, isomalt, erythritol, sorbitol, mannitol, xylitol), bulking agents like polydextrose or other sweeteners like tagatose, high-intensity sweeteners like saccharin, aspartame, acesulfame-K, cyclamate, neohesperidin, rhaumathin, sucralose, alitame, neotame or any possible combinations thereof. Preferably, the sugar used is sucralose.

Gelling agents present in the aqueous phase may be selected from carrageenans, pectins, gellan, gelatines, guar gum, acacia gum, sodium alginate, xanthan gum, proteins or mixtures thereof. Preferably, the gelling agent used is carrageenan.

In the emulsions of the invention, the fat phase comprises a mixture of fat and emulsifier. The fat may be any fat with a melting point below 45°C, preferably below 35°C. Preferably, the fat is selected from cocoa butter, cocoa butter equivalent, cocoa butter substitute or cocoa butter replacer.

The emulsifiers present in the fat phase are selected from sugar esters, polyglycerol fatty acid esters, polyglycerol polyricinoleate (PGPR), polysorbates (polyoxyethylene sorbitan esters), monoglycerides and any possible combination thereof.

The amount of emulsifiers present in the fat phase is between 0.5 and 3%. Preferably it is between 1.5 and 2%.

As shown in Figure 1, the food-grade particles may be added to the emulsion after formation of said emulsion. The food-grade particles may be added directly as such or may be dispersed in fat prior to addiction.

The water-in-oil emulsion composition comprises food-grade particles suspended in the oil phase in an amount of up to 20%.

The food-grade particles may be any edible particle selected from cocoa, milk powder, starch, calcium carbonate, fruit powder, silicon dioxide etc. or mixtures thereof.

Preferably, the food-grade particles are cocoa particles added in the form of cocoa powder or cocoa liquor. This will give the coating a chocolate aspect and taste. The cocoa powder or the cocoa liquor used may be natural or alkalinised.

Suspending the food-grade particles in the fat phase, rather than in the aqueous phase, presents the advantage that the aqueous phase maintains a low solid content which, upon freezing, confers the desired mechanical properties to the emulsion composition, as disclosed further herein.

The water-in-oil emulsions of the present invention comprise from 55-70% of a water phase and from 20-30% of a fat phase.

Typically, the emulsion compositions are used directly as coating for frozen confectionery. The coating may be achieved by dipping or other methods known in the art. Alternatively, the emulsion may be stored at freezing temperatures (-20°C) and reheated for the coating process when need be.

In any case, the water phase of the emulsions comprises solids dissolved therein in an amount less than 10%. This presents the advantage that, when frozen, the emulsions are hard and brittle, with firmness and brittleness comparable to traditional fat-based ice cream coatings.

Without wishing to be bound by theory, it is thought that the low concentration of dissolved solids in the aqueous phase allows the water droplets of the water phase to become solid at freezing temperatures (e.g. -20°C). The higher the solids concentration in the aqueous phase, the less crystallised the water droplets are at freezing temperatures (e.g. -20°C).

Thus, the water-in-oil emulsions of the present invention may be used in the production of brittle coatings for frozen confectionery. The coating of frozen confectionery with the emulsion compositions of the present invention may be carried out by any techniques known to the skilled person.

By frozen confectionery is meant any of ice cream, sorbet, mellorine, frozen yogurt, frozen mousse, frozen custard, sherbet etc.

The invention therefore provides a brittle coating for frozen confectionery comprising from 55 to 70% of an aqueous phase, from 20 to 30% of an oil phase, wherein the aqueous phase comprises solids dissolved therein in an amount less than 10% and wherein food-grade particles are suspended in the oil phase of said emulsion in an amount up to 20%.

The influence of solids content of the water phase on the brittleness of the coatings are illustrated in Figure 2. As can be seen in Figure 2, the more sucrose is present in the aqueous phase, the less brittle it is.

Brittleness can be measured by how much mass can be applied to a solid before it breaks with very little deformation. Brittleness is therefore proportional to the breaking force. The higher the force required to break the sample, the higher the brittleness.

The coatings of the invention are brittle since they will suffer very little deformation before breaking. By "very little deformation" is meant that, on average, a distance of 0.5-3mm is covered before a sample of 4 mm thickness breaks.

The brittleness of the coatings of the present invention is between 2500 g and 6000 g. Preferably, the coatings have a brittleness between 4000 and 6000 g.

A high brittleness, as exhibited by the coatings of the present invention, is advantageous. Indeed, this provides texture characteristics which render the product more appealing, by having a high snap.

The coatings of the present invention offer the advantage that they contain less fat than traditional fat-based coatings. Indeed a reduction of between 40-70% fat, and a caloric reduction of more than 50% compared to regular chocolate coating is achievable. The coatings of the invention are also **characterised in that** they demonstrate similar mechanical properties (snap, melting behaviour etc.) compared to regular chocolate coating, as well as improved brittleness.

A coated frozen confectionery comprising a coating according to the invention may be any type of frozen dessert such as ice-cream, sorbet, mellorine, frozen yogurt, frozen mousse, frozen custard, sherbet etc.

The method for producing a water-in-oil emulsion for preparing a brittle frozen confectionery coating according to the present invention comprises in a first step preparing an aqueous phase by mixing water with water-soluble solids. The solids are present in an amount less than 10%. The water-soluble solids are selected from sugars, milk powders, gelling agents etc. or mixtures thereof. These are selected from the groups described above.

Typically, the aqueous phase ingredients are mixed with water and stirred at 25°C for 10 minutes at a shear rate of 200 rpm. The mixture is then heated to between 80°C and 95°C, preferably to 86°C over 20 minutes at a shear rate of 200 rpm, and stirred at that temperature and at that shear rate for 30 minutes. The mixture is then stored in an oven at 90°C during the preparation of the fat phase.

In a second step, the fat phase is prepared by mixing the fat in a pre-heated crystalliser (e.g. 80°C) with the emulsifiers. The fat may be any fat with a melting point below 45°C, preferably less than 35°C. The emulsifiers or combination of emulsifiers are selected from the group described above.

Emulsification of the mixture of the aqueous phase and of the fat phase is then carried out under heat. Preferably the emulsification is carried out at a temperature between 70°C and 80°C, more preferably 75°C for up to 10 minutes at 250 rpm.

The emulsion is then cooled, with a gradual decrease of the shear rate.

Food-grade particles are then gently stirred into the emulsion, preferably by using a spatula, at between 35 and 45°C, preferably at a temperature of about 40°C. The emulsion may then be used directly as a coating for or as inclusions in frozen confectionery.

The compositions obtainable by the method present the advantage of being low in fat, while retaining the desirable characteristics of traditional high-fat coatings. These even exhibit increased brittleness for an optimum snap.

The present invention is further illustrated by means of non-limiting examples.

### Examples

### Example 1: Water-in-oil emulsion recipe 1

| **Ingredients** | **Amount (%)** |
|---|---|
| Fat | 20-30 |
| Emulsifiers | 0.5-3 |
| Food-grade particles (e.g. cocoa) | 5-15 |
| Gelling agent | 0.5-1 |
| Sugar | 3-7 |
| Water | 55-65 |

The coating was made according to the process described previously.

The present coating recipe has 30% less fat and a reduction of up to 50% in the calories compared to traditional fat-based coatings.

### Example 2: Water-in-oil emulsion recipe 2

| **Ingredients** | **Amount (%)** |
|---|---|
| Fat | 20-30 |
| Emulsifier(s) | 1-3 |
| Food-grade particles (e.g. cocoa) | 5-15 |
| Sugar | 1-5 |
| Water | to 100% |

Preparation of the emulsion: Fat with emulsifier are mixed together at 40°C. Sugar is dissolved into water and heated at 40°C. Emulsification is then done at 40°C with the blade turning at 250 rpm. Emulsion is kept under these conditions for 20 min. Then food-grade particles are added at 40°C under gentle mixing (60 rpm). The resulting mass is ready to be coated around an ice-cream at a temperature between 35 to 40°C.

### Example 3: Water-in-oil emulsion recipe 3

| **Ingredients** | **Amount (%)** |
|---|---|
| Fat | 30% |
| PGPR, Dimodan U/J 50/50 | 2% |
| Cocoa particles | 9% |
| Carrageenan | 0.9% |
| Sugar | 25% |
| Water | to 100% |

This emulsion is not inside the frame of this patent for the composition. It was made with the same process as the one described in the main part of the specification.

### Example 4: Brittleness measurements

### Materials

- Texture Analyzer Stable Micro System TA-HD, equipped with a 50 kg load cell,
- Geometry Stable Micro System Three Point Bend Rig (HDP/3 PB) composed of a rig base plate with two supporting blades and a compression unit,
- A refrigerated box Heraus Vötsch HT 4004, regulated at -15°C.
- Plastic weighting tray, external dimensions 9*9 cm,
- Dry ice (CO₂) in pellets.

### Method

### Samples preparation

Directly after the fabrication, while the sample is still liquid, 20 grams exactly are poured in a plastic weighting tray such that the sample covers entirely the bottom of the tray in a homogenous way.

The sample is put in the freezer at -25°C ensuring that it is kept absolutely horizontal in order to keep the same thickness over the whole surface and kept there for minimum 3 days.

One hour before carrying out the measurements, the samples are put in a refrigerated box regulated at -15°C.

### Parameters of the apparatus

| | |
|---|---|
| Program : | Texture Expert Exceed (Version 2.61) |
| Settings : | Measure force in compression Return to start |
| Parameters: | Pre-test speed 2.00 mm/s Test speed 3.00 mm/s Post-test speed 10.00 mm/s Distance 5.0 mm Load cell 50 kg |
| Trigger: | Type: Auto Force: 15 g |
| Acquisition Rate: | 400 pps |
| Units: | Force: grams Distance: millimeters |
| Break detect; | Off |

### Installation of the geometry

Screw the rig base plate on the heavy duty platform of the texture analyzer and install on it the part with the two supporting blades. Hold tight the two screws ahead and on the right side in order that it is fixed onto the base plate.

Screw the upper blade on the load cell. Lower the upper blade between the two supporting blades and adjust the upper blade so they are parallels and their front and bottom face are at the same level. Jam the rig base plate on the heavy duty platform in this position.

Go back up the upper blade and move apart the two supporting blades of 3 cm each to obtain a total space between this two blades of 6 cm.

Install around the base plate a sagex lid with a hole cut in its centre in order to be able to cool down the lower part with dry ice.

Finally the upper and lower blades should be distant from around 1 to 1.5 cm to let enough place to put the sample on. If this distance is too big, the analysis will take too many time and the sample will reheat too much.

### Measurement

The sample is taken out of the refrigerated box and turned out of its plastic tray and put on the texture analyzer in the middle of the two supporting blades cooled with dry ice. The measurement is started immediately.

The following parameters for assessing the brittleness are measured:
- Maximal strength at which the sample breaks.
- Distance covered by the upper blade between the first contact with the sample (beginning of the measurement) and the moment of the break.

Measurements carried out on standard commercial coating samples (shown in Fig. 2) show a range of brittleness between 2300 and 4000g. The brittleness of the coatings according to the invention is between 2300 and 6100g (Fig. 2) .

### Example 5: Brittleness measurements

Sample of example 1 was compared to sample of example 3, using measurement of brittleness described in example 4. Sample at 25% sugar had a low brittleness. Example 1 sample has a maximal strength of 4800g while sample of example 3 has a maximal strength of 600g. The first one is brittle while the second one is not.

## Claims

1. Water-in-oil emulsion composition for preparing a brittle frozen confectionery coating comprising from 55 to 70% of an aqueous phase and from 20 to 30% of an oil phase, wherein the aqueous phase comprises solids dissolved therein in an amount less than 10% and wherein food-grade particles are suspended in the oil phase in an amount up to 20%, and wherein emulsifiers selected from sugar esters, polyglycerol fatty acid esters, polyglycerol polyricinoleate (PGPR), polysorbates (polyoxyethylene sorbitan esters), monoglycerides and any possible combination thereof are present in the fat phase in an amount of from 0.5 to 3%.

2. Water-in-oil emulsion according to claim 1, wherein the food-grade particles suspended in the oil phase are any edible particles selected from cocoa, milk, starch, calcium carbonate, fruit powder or mixtures thereof.

3. Water-in-oil emulsion according to claim 2, wherein the particles are cocoa particles in the form of cocoa powder or cocoa liquor.

4. Water-in-oil emulsion according to claim 3, wherein the cocoa powder or cocoa liquor is natural or alkalinised.

5. Water-in-oil emulsion according to any of the preceding claims, wherein the solids dissolved in the aqueous phase are selected from sugars, milk solids, gelling agents and mixtures thereof.

6. Water-in-oil emulsion according any of the preceding claims, wherein the oil phase comprises any fat with a melting point of less than 35°C.

7. Water-in-oil emulsion according to claim 6, wherein the fat is selected from cocoa butter, cocoa butter equivalent, cocoa butter substitute or cocoa butter replacer.

8. Use of a water-in-oil emulsion composition according to any of claims 1 to 7 for the production of a brittle coating for frozen confectionery, wherein the frozen confectionery is ice cream, sorbet, mellorine, frozen yogurt, frozen mousse, frozen custard, sherbet.

9. Brittle coating for frozen confectionery comprising a water-in-oil emulsion according to any of claims 1 to 7.

10. A brittle coating according to claim 9, **characterised in that** its brittleness measured as herein defined is between 2500 and 6000 g.

11. Coated frozen dessert comprising a coating according to any of claims 9 to 10.

12. Method for producing a water-in-oil emulsion as defined in claim 1 for preparing a brittle frozen confectionery coating comprising the steps of
a) Preparing an aqueous phase by mixing water with up to 10% of water-soluble solids and heating the mixture
b) Preparing a fat phase by mixing fat and emulsifiers selected from sugar esters, polyglycerol fatty acid esters, polyglycerol polyricinoleate (PGPR), polysorbates (polyoxyethylene sorbitan esters), monoglycerides and combinations thereof and heating the mixture
c) Emulsifying the mixture of said aqueous phase and said fat phase under heat to provide an emulsion comprising from 55 to 70% of an aqueous phase and 20 to 30% of fat phase
d) Gently adding up to 20% of food-grade particles into the emulsion
e) Coating a frozen confectionery with the emulsion obtained in step d.

13. Method according to claim 12, wherein the water-soluble solids are selected from sugars, gelling agents and mixtures thereof.

14. Method according to claim 13, wherein the food-grade particles may be added to the emulsion as such, or as a dispersion in fat.

15. Method according to claim 12, wherein the food-grade particles are gently stirred into the emulsion at 35 to 45°C.

16. Method according to any of claims 12 to 15, wherein the fat is selected from any fat with a melting point below 45°C, preferably below 35°C.

17. Method according to claim 16, wherein the fat is selected from cocoa butter, cocoa butter equivalent, cocoa butter substitute or cocoa butter replacer.

18. Method according to any of claims 12 to 17, wherein the water-in-oil emulsion obtained is cooled to - 20°C.

## Patentansprüche

1. Wasser-in-Öl-Emulsionszusammensetzung zur Herstellung eines spröden Überzugs für gefrorene Süsswaren, die von 55 bis 70% einer wässrigen Phase und von 20 bis 30% einer Ölphase enthält, wobei die wässrige Phase Feststoffe enthält, die darin in einer Menge von weniger als 10% gelöst sind und wobei Partikel in Lebensmittelqualität in der Ölphase in einer Menge von bis zu 20% suspendiert sind und wobei Emulgatoren, die aus Zuckerestern, Polyglycerin-Fettsäureestern, Polyglycerin-Polyricinoleat (PGPR), Polysorbaten (Polyoxyethylen-Sorbitanestern), Monoglyceriden und jeder möglichen Kombination davon ausgewählt sind, in der Fettphase in einer Menge von 0,5 bis 3% vorhanden sind.

2. Wasser-in-Öl-Emulsion nach Anspruch 1, wobei die in der Ölphase suspendierten Partikel in Lebensmittelqualität beliebige essbare Partikel sind, die aus Kakao, Milch, Stärke, Calcium, Carbonat, Fruchtpulver, oder Mischungen davon ausgewählt sind.

3. Wasser-in-Öl-Emulsion nach Anspruch 2, wobei die Partikel Kakaopartikel in Form von Kakaopulver oder Kakaoflüssigkeit sind.

4. Wasser-in-Öl-Emulsion nach Anspruch 3, wobei das Kakaopulver oder die Kakaoflüssigkeit natürlich oder alkalisiert sind.

5. Wasser-in-Öl-Emulsion nach einem der vorhergehenden Ansprüche, wobei die in der wässrigen Phase gelösten Feststoffe aus Zuckern, Milchfeststoffen, Geliermitteln und Mischungen davon ausgewählt sind.

6. Wasser-in-Öl-Emulsion nach einem der vorhergehenden Ansprüche, wobei die Ölphase ein beliebiges Fett mit einem Schmelzpunkt von weniger als 35°C enthält.

7. Wasser-in-Öl-Emulsion nach Anspruch 6, wobei das Fett aus Kakaobutter, Kakaobutter-Äquivalent, Kakaobutterersatz oder Kakaobutteraustauschstoff ausgewählt ist.

8. Verwendung einer Wasser-in-Öl-Emulsionszusammensetzung nach einem der Ansprüche 1 bis 7 zur Herstellung eines spröden Überzugs für gefrorene Süsswaren, wobei die Süssware Eiscreme, Sorbet, Mellorine, gefrorener Joghurt, gefrorene Mousse, gefrorener Pudding, Fruchteis ist.

9. Spröder Überzug für gefrorene Süsswaren, der eine Wasser-in-Öl-Emulsion nach einem der Ansprüche 1 bis 7 enthält.

10. Spröder Überzug nach Anspruch 9, **dadurch gekennzeichnet, dass** seine wie hierin definiert gemessene Brüchigkeit zwischen 2500 und 6000 g liegt.

11. Überzogenes gefrorenes Dessert, das einen Überzug nach einem der Ansprüche 9 bis 10 enthält.

12. Verfahren zur Herstellung einer wie in Anspruch 1 definierten Wasser-in-Öl-Emulsion zur Herstellung eines spröden Überzugs für gefrorene Süsswaren, bei dem
a) Eine wässrige Phase durch Mischen von Wasser mit bis zu 10% wasserlöslichen Feststoffen und Erhitzen der Mischung hergestellt wird
b) Eine Fettphase hergestellt wird durch Mischen von Fett und Emulgatoren, die aus Zuckerestern, Polyglycerin-Fettsäureestem, Polyglycerin-Polyricinoleat (PGPR), Polysorbaten (Polyoxyethylen-Sorbitanestern), Monoglyceriden und Kombinationen davon ausgewählt werden, und Erhitzen der Mischung
c) Die Mischung dieser wässrigen Phase und dieser Fettphase unter Wärme emulgiert wird, um eine Emulsion bereitzustellen, die von 55 bis 70% einer wässrigen Phase und 20 bis 30% Fettphase enthält
d) Vorsichtig bis zu 20% an Partikeln in Lebensmittelqualität zu der Emulsion gegeben werden
e) Eine gefrorene Süssware mit der in Schritt d erhaltenen Emulsion überzogen wird.

13. Verfahren nach Anspruch 12, bei dem die wasserlöslichen Feststoffe aus Zuckern, Geliermitteln und Mischungen davon ausgewählt werden.

14. Verfahren nach Anspruch 13, bei dem die Partikel in Lebensmittelqualität als solche oder als Dispersion in Fett zu der Emulsion gegeben werden können.

15. Verfahren nach Anspruch 12, bei dem die Partikel in Lebensmittelqualität vorsichtig bei 35 bis 45°C in die Emulsion eingerührt werden.

16. Verfahren nach einem der Ansprüche 12 bis 15, bei dem das Fett aus irgendeinem Fett mit einem Schmelzpunkt unter 45°C, vorzugsweise unter 35°C ausgewählt wird.

17. Verfahren nach Anspruch 16, bei dem das Fett aus Kakaobutter, Kakaobutter-Äquivalent, Kakaobutterersatz oder Kakaobutteraustauschstoff ausgewählt wird.

18. Verfahren nach einem der Ansprüche 12 bis 17, bei dem die erhaltene Wasser-in-Öl-Emulsion auf -20°C abgekühlt wird.

## Revendications

1. Composition d'émulsion eau-dans-huile pour la préparation d'un enrobage de confiserie glacée fragile comprenant de 55 à 70 % d'une phase aqueuse et de 20 à 30 % d'une phase huileuse, dans laquelle la phase aqueuse comprend des solides dissous dedans dans une quantité inférieure à 10 % et dans laquelle des particules de qualité alimentaire sont en suspension dans la phase huileuse dans une quantité allant jusqu'à 20 %, et dans laquelle des émulsifiants choisis parmi les esters de sucre, les esters d'acide gras de polyglycérol, le polyricinoléate de glycérol (PGPR), les polysorbates (esters de sorbitan de polyoxyéthylène), les monoglycérides et n'importe quelle combinaison possible de ceux-ci sont présents dans la phase grasse dans une quantité allant de 0,5 à 3 %.

2. Emulsion eau-dans-huile selon la revendication 1, dans laquelle les particules de qualité alimentaire en suspension dans la phase huileuse sont n'importe quelles particules comestibles choisies parmi le cacao, le lait, l'amidon, le calcium, le carbonate, de la poudre de fruits ou des mélanges de ceux-ci.

3. Emulsion eau-dans-huile selon la revendication 2, dans laquelle les particules sont des particules de cacao sous la forme de poudre de cacao ou de liqueur de cacao.

4. Emulsion eau-dans-huile selon la revendication 3, dans laquelle la poudre de cacao ou la liqueur de cacao est naturelle ou alcalinisée.

5. Emulsion eau-dans-huile selon l'une des revendications précédentes, dans laquelle les solides dissous dans la phase aqueuse sont choisis parmi les sucres, les matières sèches du lait, les agents gélifiants et des mélanges de ceux-ci.

6. Emulsion eau-dans-huile selon l'une des revendications précédentes, dans laquelle la phase huileuse comprend n'importe quelle matière grasse ayant un point de fusion de moins de 35 °C.

7. Emulsion eau-dans-huile selon la revendication 6, dans laquelle la matière grasse est choisie parmi le beurre de cacao, un équivalent de beurre de cacao, un substitut de beurre de cacao ou un agent de remplacement de beurre de cacao.

8. Utilisation d'une composition d'émulsion eau-dans-huile selon l'une des revendications 1 à 7 pour la production d'un enrobage fragile pour confiserie glacée, dans laquelle la confiserie glacée est de la crème glacée, du sorbet, de la mellorine, du yogourt glacé, de la mousse glacée, de la crème anglaise glacée, du jus de fruits congelé.

9. Enrobage fragile pour confiserie glacée comprenant une émulsion eau-dans-huile selon l'une des revendications 1 à 7.

10. Un enrobage fragile selon la revendication 9, **caractérisé en ce que** sa fragilité mesurée selon la présente définition est comprise entre 2500 et 6000 g.

11. Dessert glacé enrobé comprenant un enrobage selon l'une des revendications 9 à 10.

12. Procédé pour la production d'une émulsion eau-dans-huile telle que définie dans la revendication 1 pour la préparation d'un enrobage de confiserie glacée fragile comprenant les étapes suivantes :
a) préparer une phase aqueuse en mélangeant de l'eau avec jusqu'à 10 % de matières solides solubles dans l'eau et chauffer le mélange
b) préparer une phase grasse huileuse en mélangeant de la matière grasse et des émulsifiants choisis parmi les esters de sucre, les esters d'acide gras de polyglycérol, le polyricinoléate de glycérol (PGPR), les polysorbates (esters de sorbitan de polyoxyéthylène), les monoglycérides et les combinaisons de ceux-ci, et chauffer le mélange
c) émulsifier le mélange de ladite phase aqueuse et de ladite phase grasse en présence de chaleur pour fournir une émulsion comprenant entre 55 et 70 % d'une phase aqueuse et entre 20 et 30 % d'une phase grasse
d) ajouter doucement jusqu'à 20 % de particules de qualité alimentaire dans l'émulsion
e) enrober une confiserie glacée avec l'émulsion obtenue à l'étape d.

13. Procédé selon la revendication 12, dans lequel les matières solides solubles dans l'eau sont choisies parmi les sucres, les agents gélifiants et les mélanges de ceux-ci.

14. Procédé selon la revendication 13, dans lequel les particules de qualité alimentaire sont susceptibles d'être ajoutées à l'émulsion telles quelles, ou comme une dispersion dans de la matière grasse.

15. Procédé selon la revendication 12, dans lequel les particules de qualité alimentaire sont brassées doucement dans l'émulsion à une température allant de 35 à 45 °C.

16. Procédé selon l'une des revendications 12 à 15, dans lequel la matière grasse est choisie parmi n'importe quelle matière grasse ayant un point de fusion inférieur à 45 °C, de préférence inférieur à 35 °C.

17. Procédé selon la revendication 16, dans laquelle la matière grasse est choisie parmi le beurre de cacao, un équivalent de beurre de cacao, un substitut de beurre de cacao ou un agent de remplacement de beurre de cacao.

18. Procédé selon l'une des revendications 12 à 17, dans lequel l'émulsion eau-dans-huile obtenue est refroidie à - 20 °C.
